# EUROPÄISCHE PATENTANMELDUNG

(11) **EP 2 837 868 A1**
(43) Veröffentlichungstag der Anmeldung: **18.02.2015**
(21) Anmeldenummer: 14169551.0
(22) Anmeldetag: 23.05.2014
(51) Int. Cl.: F16L 13/14, F16L 33/213

(54) **Baueinheit mit einem Rohr und einem Kupplungselement sowie Verfahren zur Herstellung einer derartigen Baueinheit**

(30) Priorität: 06.08.2013 DE 102013108442
(71) Anmelder: ContiTech MGW GmbH, 34346 Hannoversch-Münden (DE)
(72) Erfinder: McKay, Thorsten, 21379 Scharnebeck (DE); Burmeister, Bernd, 21079 Hamburg (DE)
(74) Vertreter: Finger, Karsten

(57) **Zusammenfassung**

Die Erfindung betrifft eine Baueinheit (2) mit einem Rohr (4) und einem zylindrischen Kupplungselement (6), das einen hülsenförmigen Hauptstutzen (8) aufweist, wobei ein Endabschnitt (10) des Rohrs (4) in den hülsenförmigen Hauptstutzen (8) des Kupplungselements (6) eingesteckt ist, wobei die Baueinheit (2) einen Formgedächnisring (12) aufweist, wobei der von einem ersten Zustand durch Erwärmung in einen zweiten Zustand mit einem vergrößerten Außendurchmesser (D) überführbar ist, wobei der Formgedächnisring (12) in den Endabschnitt (10) des Rohrs (4) eingebracht oder von diesem gebildet ist, wobei der Formgedächnisring (12) in den zweiten Zustand überführt ist und wobei der Formgedächnisring (12) im zweiten Zustand den Endabschnitt (10) des Rohrs (4) aufweitet und radial gegen den hülsenförmigen Hauptstutzen (8) des Kupplungselements (6) drückt. Des Weiteren betrifft die Erfindung ein Verfahren zur Herstellung einer derartigen Baueinheit (2).

## Beschreibung

Die Erfindung betrifft eine Baueinheit mit einem Rohr und einem zylindrischen Kupplungselement, das einen hülsenförmigen Hauptstutzen aufweist, wobei ein Endabschnitt des Rohrs in den hülsenförmigen Hauptstutzen des Kupplungselements eingesteckt ist.

Eine derartige Baueinheit mit einem Rohr und einem zylindrischen Kupplungselement ist aus dem Stand der Technik bekannt. Bei dem Rohr handelt es sich zumeist um einen länglichen, zylindrischen Hohlkörper mit einem ringförmigen Querschnitt. Bevorzugt ist der Querschnitt kreisringförmig oder ovalringförmig. Grundsätzlich kann das Rohr aus einem beliebigen Material hergestellt sein. Bevorzugt ist das Rohr aus Kunststoff oder einem Elastomermaterial. So kann es sich beispielsweise bei dem Rohr um einen Kunststoffschlauch oder einen Elastomerschlauch handeln. Aus dem Stand der Technik sind Kupplungen bekannt, die zwei Rohrleitungen oder eine Rohrleitung und ein Aggregat miteinander verbinden können und die zum Transport von flüssigen oder gasförmigen Medien ausgebildet sind. Eine derartige Kupplung weist für gewöhnlich mindestens zwei Kupplungselemente auf, die korrespondierend zu einander ausgestaltet sind. Für die Baueinheit ist vorteilhaft ein Kupplungselement vorgesehen, dass zum Leiten eines flüssigen oder gasförmigen Mediums ausgebildet ist. Bei dem Kupplungselement handelt es sich zumeist um einen zylindrischen Hohlkörper, an dessen einen Ende der hülsenförmige Hauptstutzen angeordnet ist. Der Hauptstutzen ist ebenfalls hohl und zylindrisch ausgebildet, so dass ein Endabschnitt des Rohrs in den hülsenförmigen Hauptstutzen des Kupplungselements eingesteckt werden kann. Bevorzugt ist die Form des hülsenförmigen Hauptstutzens an die Form des Endabschnitts des Rohrs angepasst. Ist beispielsweise ein kreisringförmiger Querschnitt für den Endabschnitt des Rohrs vorgesehen, so kann für den Hauptstutzen ebenfalls ein kreisringförmiger Querschnitt vorgesehen sein.

Aus der Patentschrift US 2010/0254758 A1 ist eine Pressverbindung zwischen zwei Rohren bekannt. Die Pressverbindung wird in der Weise hergestellt, dass ein Rohr mit einem kleineren Durchmesser in das Rohr mit einem größeren Durchmesser gesteckt wird, wobei zunächst ein ringförmiger Spalt zwischen den Rohren verbleibt. Bei dem äußeren Rohr kann es sich beispielsweise um ein zylindrisches Kupplungselement mit einem hülsenförmigen Hauptstutzen handeln. Um das äußere Rohr - also insbesondere den hülsenförmigen Hauptstutzen - fluiddicht gegen das innere Rohr zu pressen, ist außen an der Mantelfläche des äußeren Rohrs ein Klemmring angeordnet, der das äußere Rohr soweit zusammenpresst, so dass der Spalt abschnittsweise verschwindet und das äußere Rohr umlaufend an dem inneren Rohr anliegt. Der Klemmring ist vorzugsweise aus einem Formgedächtnismaterial hergestellt, der sich beim Erhitzen zusammenzieht und somit den Durchmesser verringert.

Insbesondere in Leitungssystemen mit höherem Überdruck oder mit großem Unterdruck hat sich gezeigt, dass für die Erreichung einer guten Fluiddichtigkeit an einer Pressverbindung gemäß einer Ausgestaltungsvariante der zuvor genannten Patentschrift das äußere Rohr sehr stark auf das innere Rohr gepresst werden muss. Dabei kommt es nicht selten zu einer Verformung des inneren Rohrs und einer daraus folgenden Innenquerschnittsverkleinerung. Somit ist eine derartige Pressverbindung zwangsläufig mit einem erhöhten Strömungswiderstand verknüpft. Außerdem setzt eine Verbindung von zwei Rohren gemäß der genannten Ausgestaltungsvariante der zuvor genannten Patentschrift voraus, dass das Rohr mit dem geringeren Durchmesser eine hohe Formstabilität aufweist, um eine fluiddichte Pressverbindung zu dem äußeren Rohr zu gewährleisten.

Ausgehend von dem Stand der Technik liegt der vorliegenden Erfindung die Aufgabe zugrunde, eine gattungsgemäße Baueinheit und ein entsprechendes Herstellungsverfahren zur Verfügung zu stellen,
die es erlauben, flexible Rohre, insbesondere Kunststoffschläuche, zum Einstecken in den hülsenförmigen Hauptstutzen des Kupplungselements zu verwenden.

Gemäß einem ersten Aspekt wird die Aufgabe gelöst durch eine Baueinheit mit einem Rohr und einem zylindrischen Kupplungselement, das einen hülsenförmigen Hauptstutzen aufweist, wobei ein Endabschnitt des Rohrs in den hülsenförmigen Hauptstutzen des Kupplungselements eingesteckt ist, und wobei vorgesehen ist, dass die Baueinheit einen Formgedächnisring aufweist, der von einem ersten Zustand durch Erwärmung in einen zweiten Zustand mit einem vergrößerten Außendurchmesser überführbar ist, der Formgedächnisring in den Endabschnitt des Rohrs eingebracht oder von diesem gebildet ist, der Formgedächnisring in den zweiten Zustand überführt ist und dass der Formgedächnisring im zweiten Zustand den Endabschnitt des Rohrs aufweitet und radial gegen den hülsenförmigen Hauptstutzen des Kupplungselements drückt.

Die Baueinheit zeichnet sich also unter anderem durch einen Formgedächnisring aus. Anstatt eines Formgedächnisrings können auch mehrere, insbesondere zwei, drei oder vier, Formgedächnisringe vorgesehen sein. Diese können hintereinander in dem Endabschnitt des Rohrs eingebracht sein. Ein Formgedächnisring ist ein ringförmiger Körper, der zumindest teilweise aus einem Formgedächnismaterial hergestellt ist. Ein derartiges Formgedächnisringmaterial ist vorzugsweise eine aus dem Stand der Technik bekannte Formgedächnislegierung oder ein Memorymetall. Ein Körper aus einem Formgedächnismaterial zeichnet sich vorzugsweise dadurch aus, dass sich dieser trotz einer insbesondere starken Verformung durch Wärmezufuhr an seine vorherige Form "erinnert". Wurde beispielsweise ein Körper aus Formgedächtnismaterial zusammengedrückt bzw. zusammengepresst, so kann der Körper in seine vorherige Form überführt werden, indem der Körper erwärmt wird. Dem Formgedächtnismaterial bzw. einem Körper daraus kann eine Übergangstemperatur zugeordnet werden, die bei der Erwärmung zu überschreiten ist, um das Formgedächtnismaterial bzw. den Körper in die vorherige Form zu überführen. Erfindungsgemäß ist es vorgesehen, dass der Formgedächtnisring aus Formgedächtnismaterial besteht oder dieses aufweist, so dass der Formgedächtnisring von einem ersten Zustand durch Erwärmen in einen zweiten Zustand mit einem vergrößerten Außendurchmesser überführbar ist. In dem ersten Zustand hat der Formgedächtnisring also einen kleineren Außendurchmesser. Dieser kann beispielsweise durch mechanische Verformung, insbesondere durch Pressen, erreicht worden sein.

Um zu erreichen, dass ein Endabschnitt des Rohrs gegen eine Innenseite des hülsenförmigen Hauptstutzens des Kupplungselements drückt, ist es erfindungsgemäß vorgesehen, dass der Formgedächtnisring in den Endabschnitt eingebracht oder von diesem gebildet ist. Hierbei ist es bevorzugt vorgesehen, dass der Formgedächtnisring den ersten Zustand aufweist. Mit seinem kleineren Außendurchmesser kann der Formgedächtnisring beispielsweise in den Endabschnitt des Rohrs eingesteckt sein, bevor der Endabschnitt des Rohrs in den hülsenförmigen Hauptstutzen des Kupplungselements eingesteckt ist. Es ist aber auch möglich, dass der Formgedächtnisring von dem Endabschnitt des Rohrs gebildet ist. Bevorzugt ist der Formgedächtnisring ein integraler Teil des Endabschnitts des Rohrs. In diesem Fall kann der Formgedächtnisring zusammen mit dem Endabschnitt des Rohrs in den hülsenförmigen Hauptstutzen eingesteckt werden.

Außerdem ist es vorgesehen, dass der Formgedächtnisring in den zweiten Zustand überführt ist und sodann den Endabschnitt des Rohrs radial aufweitet und diesen radial gegen den hülsenförmigen Hauptstutzen des Kupplungselements drückt. Dazu ist es bevorzugt vorgesehen, dass eine Steifigkeit des Formgedächtnisrings in Radialrichtung größer ist als eine Steifigkeit des Endabschnitts des Rohrs in Radialrichtung. Mit anderen Worten ist der Endabschnitt des Rohrs weicher als der Formgedächnisring. Das Rohr ist beispielsweise aus Kunststoff. Außerdem ist es bevorzugt vorgesehen, dass eine Steifigkeit des Formgedächtnisrings in Radialrichtung kleiner ist als eine Steifigkeit des Hauptstutzens in Radialrichtung. Damit kann der Formgedächnisring das Rohr fest gegen den Hauptstutzen drücken. Der Hauptstutzen ist beispielsweise aus Metall. Ein Endabschnitt des Rohrs, der mit einem Spiel in den hülsenförmigen Hauptstutzen einsteckbar ist, kann durch eine Zustandsüberführung des Formgedächtnisrings in der Weise radial aufgeweitet sein, dass zwischen dem Endabschnitt des Rohrs und dem hülsenförmigen Hauptstutzen eine Pressverbindung entsteht. Für die Baueinheit eignen sich somit auch flexible, weiche und/oder biegsame Rohre. Da der Formgedächtnisring in den Endabschnitt des Rohrs eingebracht ist, wird der Endabschnitt des Rohrs durch die Zustands-Überführung des Formgedächtnisrings in Radialrichtung aufgeweitet. In einem Kontaktbereich zu dem Formgedächtnisring vergrößert sich deshalb der Innendurchmesser des Endabschnitts des Rohrs. Damit kann gewährleistet werden, dass ein Strömungswiderstand durch die Baueinheit von dem Formgedächtnisring zumisst im Wesentlichen nicht erhöht wird. Denn der Formgedächtnisring kann in den Bereich mit dem vergrößerten Innendurchmesser des Endabschnitts "eintauchen". Eine derartige Pressverbindung zeichnet sich zudem vorteilhaft dadurch aus, dass die Pressverbindung weitestgehende vor äußeren, mechanischen Einwirkungen geschützt ist. Denn die Krafteinwirkung für die Pressverbindung geht im Wesentlichen von dem innen angeordneten Formgedächtnisring aus, der von außen durch den hülsenförmigen Hauptstutzen und/oder das Rohr geschützt ist.

Eine bevorzugte Ausgestaltung der Baueinheit zeichnet sich dadurch aus, dass der Außendurchmesser des Formgedächnisrings im ersten Zustand kleiner als ein ungeweiteter Innendurchmesser des Endabschnitts des Rohrs ist. Durch diese bevorzugte Wahl der Durchmesser ist es besonders einfach und ohne großen Kraftaufwand möglich, den Formgedächtnisring im ersten Zustand in den Endabschnitt des Rohrs einzubringen. Dies kann beispielsweise händisch erfolgen. Alternativ oder ergänzend kann dies mittels einer Halterung erfolgen, die vorzugsweise an dem Kupplungselement befestigt ist. In diesem Fall kann das Einbringen des Formgedächtnisrings in den Endabschnitt des Rohrs mit dem Einstecken des Endabschnitts des Rohrs in den hülsenförmigen Hauptstutzen erfolgen. Die bevorzugte Wahl der Durchmesser bietet darüber hinaus den Vorteil, dass flexible oder weiche Rohre für die Baueinheit verwendet werden können. Denn bei dieser Ausgestaltungsvariante besteht zwischen dem Formgedächtnisring im ersten Zustand und dem Endabschnitt des Rohrs ein Spiel, so dass der Formgedächtnisring allenfalls mit einer geringen Reibung bzw. mit einem geringen Widerstand in den Endabschnitt des Rohrs eingebracht werden kann. Damit wird die Gefahr verhindert, dass das Rohr beim Einbringen des Formgedächtnisrings knickt oder knittert, so dass ein gezieltes Positionieren des Formgedächtnisrings in dem Endabschnitt des Rohrs besonders einfach gewährleistet wird.

Eine bevorzugte Ausgestaltung der Baueinheit zeichnet sich dadurch aus, dass ein Außendurchmesser des Endabschnitts des Rohrs im zweiten Zustand des Formgedächnisrings derart aufgeweitet ist, dass der Endabschnitt des Rohrs abdichtend an dem hülsenförmigen Hauptstutzen des Kupplungselements anliegt. Mit anderen Worten verursacht eine Überführung des Formgedächtnisrings in den zweiten Zustand eine Vergrößerung des Außendurchmessers des Endabschnitts des Rohrs bis dieser gegen den hülsenförmigen Hauptstutzen drückt. Damit können zunächst mehrere Kontaktpunkte zwischen dem Endabschnitt des Rohrs und dem hülsenförmigen Hauptstutzen entstehen, die eine mechanische Verbindung zwischen dem Endabschnitt des Rohrs und dem hülsenförmigen Hauptstutzen gewährleisten. Zumeist ist es jedoch sinnvoll, wenn die Baueinheit fluiddicht zwischen dem Rohr und dem Kupplungselement ausgestaltet ist. Deshalb zeichnet sich die genannte Ausgestaltungsvariante bevorzugt dadurch aus, dass der Endabschnitt des Rohrs durch den Formgedächtnisring in Radialrichtung derart aufgeweitet ist, dass der Endabschnitt des Rohrs umlaufend an dem hülsenförmigen Hauptstutzen des Kupplungselements anliegt und somit den Endabschnitt des Rohrs zu dem hülsenförmigen Hauptstutzen des Kopplungselements abdichtet. Diese Abdichtung stellt besonders einfach sicher, dass an einem Verbindungsbereich zwischen dem Rohr und dem Kupplungselement kein Fluid, also kein gasförmiges oder flüssiges Medium, austritt.

Eine bevorzugte Ausgestaltung der Baueinheit zeichnet sich dadurch aus, dass ein Außendurchmesser des Formgedächnisrings im zweiten Zustand größer als ein ungeweiteter Innendurchmesser des Endabschnitts des Rohrs ist. Dieser Ausgestaltung stellt besonders einfach sicher, dass der Formgedächtnisring dazu ausgebildet ist, um den Endabschnitt des Rohrs aufzuweiten.

Eine bevorzugte Ausgestaltung der Baueinheit zeichnet sich dadurch aus, dass ein doppelter Ringquerschnittsdurchmesser des Formgedächnisrings kleiner als eine betragsmäßige Differenz zwischen dem Außendurchmesser des Formgedächnisrings im zweiten Zustand und dem Außendurchmesser des Formgedächnisrings im ersten Zustand ist. Bevorzugt handelt es sich bei den zuvor genannten Durchmessern jeweils um Mittelwerte. Der doppelte Ringquerschnittsdurchmesser entspricht einer betragsmäßigen Differenz zwischen einem Innendurchmesser des Formgedächtnisrings und dem Außendurchmesser des Formgedächtnisrings. Mit der Überführung des Formgedächtnisrings in den zweiten Zustand wird der Endabschnitt des Rohrs im Kontaktbereich zu dem Formgedächtnisring entsprechend aufgeweitet. Da der Ringquerschnittsdurchmesser kleiner als eine radiale Aufweitung des Endabschnitts des Rohrs ist, erfährt das Rohrs in dem zuvor genannten Kontaktbereich keine Verkleinerung des Innendurchmessers. Der Strömungswiderstand durch das Rohr wird deshalb zumindest im Wesentlichen nicht beeinträchtigt. Mit anderen Worten erhöht sich der Strömungswiderstand durch das Rohr nicht.

Eine bevorzugte Ausgestaltung der Baueinheit zeichnet sich dadurch aus, dass der hülsenförmige Hauptstutzen des Kupplungselements innenseitig eine Ringnut aufweist, gegen die der Endabschnitt des Rohrs drückt, wenn der Formgedächnisring in dem zweiten Zustand ist. Die Ringnut gewährleistet, dass der Endabschnitt des Rohrs kreisförmig oder ringförmig gegen den Hauptstutzen gedrückt wird. In der Praxis wurde festgestellt, dass ein entsprechend kreisförmiger oder ringförmiger Andruck eine hohe Dichtigkeit zwischen dem Rohr und dem Kupplungselement sorgt.

Eine bevorzugte Ausgestaltung der Baueinheit zeichnet sich dadurch aus, dass das Kupplungselement einen zylindrischen Hilfsstutzen aufweist, der derart in den Hauptstutzen hineinragt, dass zwischen dem Hauptstutzen und dem Hilfsstutzen ein zylinderringförmiger Schacht zum Einstecken des Endabschnitts des Rohrs ausgebildet ist. Der Hauptstutzen und der Hilfsstutzen bieten zusammen den Vorteil, dass das Rohr besonders einfach und sicher in den hülsenförmigen Hauptstutzen eingesteckt werden kann. Dies gilt vorzugsweise für flexible oder weiche Rohre, insbesondere Schläuche, die beim Einstecken in den Hauptstutzen zum Verbiegen oder Knicken neigen. Die beiden Stutzen bieten dem einzusteckenden Rohr eine Einführung und stellen somit eine korrekte Positionierung des Endabschnitts des Rohrs in dem hülsenförmigen Hauptstutzen sicher. Der durch die beiden Stutzen gebildete Schacht gewährleistet zudem, dass das einzusteckende Rohr sich nicht verbiegt oder knickt, sondern problemlos in den Hauptstutzen einsteckbar ist.

Eine bevorzugte Ausgestaltung der Baueinheit zeichnet sich dadurch aus, dass der Hilfsstutzen an seiner zum Hauptstutzen zeigenden Seite eine Aufnahme für den Formgedächnisring aufweist. Der Hilfsstutzen eignet sich somit auch als Montagehilfsmittel für den Formgedächtnisring. Bevor der Endabschnitt des Rohrs in den Hauptstutzen gesteckt wird, kann der Formgedächtnisring im ersten Zustand auf der Aufnahme befestigt sein. Daraufhin kann mit dem Einstecken des Endabschnitts des Rohrs in den hülsenförmigen Hauptstutzen der Formgedächtnisring in den Endabschnitt des Rohrs eingebracht werden. Durch die Zuordnung der Aufnahme zu dem Kupplungselement kann eine besonders präzise Positionierung des Formgedächtnisrings sichergestellt werden. Bei der Aufnahme kann es sich beispielsweise um eine Ringnut oder um Rastnasen handeln. Besonders bevorzugt ist der Endabschnitt des Rohrs soweit in den Hauptstutzen des Kupplungselements eingesteckt, dass das Rohr gegen einen Anschlag des Kupplungselements drückt. Damit wird zudem eine besonders genaue Positionierung des Formgedächtnisrings in dem Endabschnitt des Rohrs gewährleistet.

Eine bevorzugte Ausgestaltung der Baueinheit zeichnet sich dadurch aus, dass die Aufnahme derart angeordnet ist, dass ein von der Aufnahme fixierter Formgedächnisring und die Ringnut koaxial sowie in Längsrichtung des Kupplungselements in einer gleichen Ebene angeordnet sind. Diese Ausgestaltung bietet den Vorteil, dass der Formgedächtnisring mit der Überführung in seinen zweiten Zustand das eingesteckte Rohr im Bereich der Ringnut aufweitet und an diese sicher andrückt. Mit diesem sicheren Andruck kann eine umlaufende Kontaktfläche gewährleistet werden, die ein ungewolltes Ausströmen von Fluid an der Kontaktfläche verhindert.

Eine bevorzugte Ausgestaltung der Baueinheit zeichnet sich dadurch aus, dass zwischen dem Endabschnitt des Rohrs und dem Hauptstutzen ein Dichtungsring, insbesondere aus Gummi, angeordnet ist. Damit kann eine Dichtigkeit zwischen dem Rohr und dem Kupplungselement weiter erhöht werden.

Gemäß einem weiteren Aspekt wird die eingangs genannte Aufgabe gelöst durch ein Verfahren zur Herstellung einer Baueinheit mit einer Pressverbindung zwischen einem Rohr und einem Kupplungselement umfassend die Schritte: Bereitstellen eines zylindrischen Kupplungselements, das einen hülsenförmigen Hauptstutzen aufweist, Bereitstellen eines Rohrs, Einbringen eines Formgedächnisrings in einen Endabschnitt des Rohrs, wobei der Formgedächnisring in einen ersten Zustand überführt ist, und wobei der Formgedächnisring von dem ersten Zustand durch Erwärmung in einen zweiten Zustand mit einem vergrößerten Außendurchmesser überführbar ist, Einstecken des Endabschnitts des Rohrs in den Hauptstutzen des Kupplungselements, Erwärmen des Formgedächnisrings bis dieser den zweiten Zustand erreicht, so dass der Formgedächnisring den Endabschnitt des Rohrs aufweitet und radial gegen den Hauptstutzen des Kupplungselements drückt.

Dabei gelten Merkmale, Details und Vorteile, die im Zusammenhang mit der erfindungsgemäßen Baueinheit beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Ein Zweck des Verfahrens ist es, eine Pressverbindung zwischen dem Rohr und dem Kupplungselement herzustellen. Dies wird erreicht, indem der Endabschnitt des Rohrs radial gegen den Hauptstutzen des Kupplungselements gedrückt wird. Der Endabschnitt des Rohrs ist dazu radial aufgeweitet, was durch den Formgedächtnisring im zweiten Zustand verursacht wird. Der Erfindung geht die Erkenntnis voraus, dass ein ausgeweiteter Endabschnitt des Rohrs nicht sehr leicht - wenn überhaupt - in den hülsenförmigen Hauptstutzen des Kupplungselements einsteckbar ist. Deshalb ist es erfindungsgemäß vorgesehen, den Formgedächtnisring in einen Endabschnitt des Rohrs einzubringen, wobei der Formgedächtnisring in einen ersten Zustand überführt ist. Mit anderen Worten ist es bevorzugt vorgesehen, dass der Formgedächnisring vor dem Einbringen in den Endabschnitt des Rohrs in den ersten Zustand überführt wurde. In seinem ersten Zustand ist der Formgedächtnisring bevorzugt in der Weise ausgebildet und bzw. oder ausgestaltet, dass der Endabschnitt des Rohrs zumindest im Wesentlichen widerstandsfrei bzw. problemlos in den Hauptstutzen des Kupplungselements einsteckbar ist.

Nachdem der Endabschnitt des Rohrs in den Hauptstutzen des Kupplungselements eingesteckt ist, zeichnet sich die Baueinheit vorzugsweise durch eine koaxiale Anordnung von Hauptstutzen, Endabschnitt des Rohrs und Formgedächtnisring aus. Wird der Formgedächtnisring soweit erwärmt, bis dieser seinen zweiten Zustand erreicht, drückt der Formgedächtnisring vorzugsweise gegen eine innere Mantelfläche des Endabschnitt des Rohrs und weitet damit den Endabschnitt des Rohrs in Radialrichtung auf, so dass der Endabschnitt des Rohrs radial gegen eine Innenseite des Hauptstutzens des Kupplungselements drückt. Damit entsteht eine Pressverbindung zwischen dem Rohr und dem Kupplungselement.

Eine bevorzugte Ausgestaltung des Verfahrens zeichnet sich dadurch aus, dass der Formgedächtnisring derart ausgestaltet ist, dass der Außendurchmesser des Formgedächtnisrings beim Überführen von dem ersten Zustand in den zweiten Zustand soweit vergrößert wird, dass der Endabschnitt des Rohrs umlaufend gegen den hülsenförmigen Hauptstutzen des Kupplungselements gedrückt wird. Besonders bevorzugt ist der Außendurchmesser des Formgedächtnisrings im zweiten Zustand größer als ein Innendurchmesser des hülsenförmigen Hauptstutzens des Kupplungselements. Selbst bei Rohren mit einer sehr geringen Rohrwandstärke kann damit gewährleistet werden, dass der Endabschnitt des Rohrs umlaufend gegen den hülsenförmigen Hauptstutzen des Kupplungselements gedrückt wird.

Eine bevorzugte Ausgestaltung des Verfahrens zeichnet sich durch ein Fixieren des Formgedächnisrings im ersten Zustand auf einem Hilfsstutzen aus, wobei der Hilfsstutzen derart in den Hauptstutzen hineinragt, dass zwischen dem Hauptstutzen und dem Hilfsstutzen ein zylinderringförmiger Schacht zum Einstecken des Endabschnitts des Rohrs ausgebildet ist. Der Hilfsstutzen dient deshalb auch als Montagehilfe. Bevor der Endabschnitt des Rohrs in den Hauptstutzen des Kupplungselements eingesteckt wird, ist es bevorzugt vorgesehen, dass der Formgedächtnisring in seinem ersten Zustand auf dem Hilfsstutzen fixiert wird. Mit dem Einstecken des Endabschnitts des Rohrs in den Hauptstutzen erfolgt sodann das Einbringen des Formgedächtnisrings in den Endabschnitt des Rohrs. Ferner ermöglicht diese Ausgestaltung die Verwendung von dünnwandigen Rohren, insbesondere Schläuchen. Obwohl derartige Rohre oftmals zum Verbiegen oder Knicken neigen, können diese dank des Hilfsstutzens problemlos in den Schacht zwischen dem Hauptstutzen und dem Hilfsstutzen eingesteckt werden, da die beiden Stutzen beim Einstecken als Führungselemente dienen. Die Stutzen verhindern deshalb effektiv ein Verbiegen oder ein Knicken des insbesondere dünnwandigen Rohres.

Eine bevorzugte Ausgestaltung des Verfahrens zeichnet sich dadurch aus, dass das Einbringen des Formgedächnisrings mit dem Einstecken des Rohrs in den Hauptstutzen erfolgt. Dies erleichtert die Montage und erhöht die Positionsgenauigkeit des Formgedächtnisrings in dem Endabschnitt des Rohrs.

Eine bevorzugte Ausgestaltung des Verfahrens zeichnet sich dadurch aus, dass der Formgedächnisring in den Endabschnitt des Rohrs vor dem Einstecken des Endabschnitts des Rohrs in den Hauptstutzen eingebracht, insbesondere eingeklemmt, wird. Dies kann beispielsweise in der Weise erreicht werden, indem der Hilfsstutzen über eine Stirnseite des Hauptstutzens hinaus ragt. Bei einer Montage kann das Rohr über eine Aufnahme des Hilfsstutzens mit dem daran fixierten Formgedächtnisring geschoben werden und sodann weiter in den Hauptstutzen eingesteckt werden. Alternativ kann es vorgesehen sein, dass der Formgedächtnisring händisch oder mit einem anderen Hilfsmittel in den Endabschnitt des Rohrs eingebracht wird. Vorzugsweise ist der Außendurchmesser des Formgedächtnisrings im ersten Zustand in der Weise ausgestaltet, dass der Formgedächtnisring im ersten Zustand in dem Rohr eingeklemmt ist. Dies bietet den Vorteil, dass der Formgedächtnisring vor dem Einstecken des Endabschnitts des Rohrs in den Hauptstutzen einfach und sicher positioniert werden kann.

Eine bevorzugte Ausgestaltung des Verfahrens zeichnet sich durch ein formschlüssiges Verbinden des Formgedächnisrings mit dem Endabschnitt des Rohrs aus. So kann der Endabschnitt des Rohrs innenseitig eine Ringnut aufweisen, in die der Formgedächtnisring einfassen kann. Damit lässt sich eine besonders einfache Positionierung des Formgedächtnisrings in dem Endabschnitt des Rohrs gewährleisten.

Eine bevorzugte Ausgestaltung des Verfahrens zeichnet sich durch ein stoffschlüssiges Verbinden des Formgedächnisrings mit dem Endabschnitt des Rohrs aus. So kann der Formgedächtnisring einen integralen Teil des Endabschnitts des Rohrs bilden. Dieser Ausgestaltung ist besonders robust gegenüber Erschütterungen oder anderen mechanischen Einwirkungen, so dass besonders einfach eine exakte Positionierung des Formgedächtnisrings sichergestellt sein kann.

Die Erfindung wird im Folgenden anhand bevorzugter Ausführungsformen unter Bezugnahme auf die beigefügten Figuren erläutert. Dabei zeigt:
- Fig. 1: eine schematische Querschnittsdarstellung des Kupplungselements,
- Fig. 2: eine schematische Querschnittsdarstellung des Kupplungselements mit einem Formgedächnisring und
- Fig. 3: eine schematische Querschnittsdarstellung der Baueinheit.

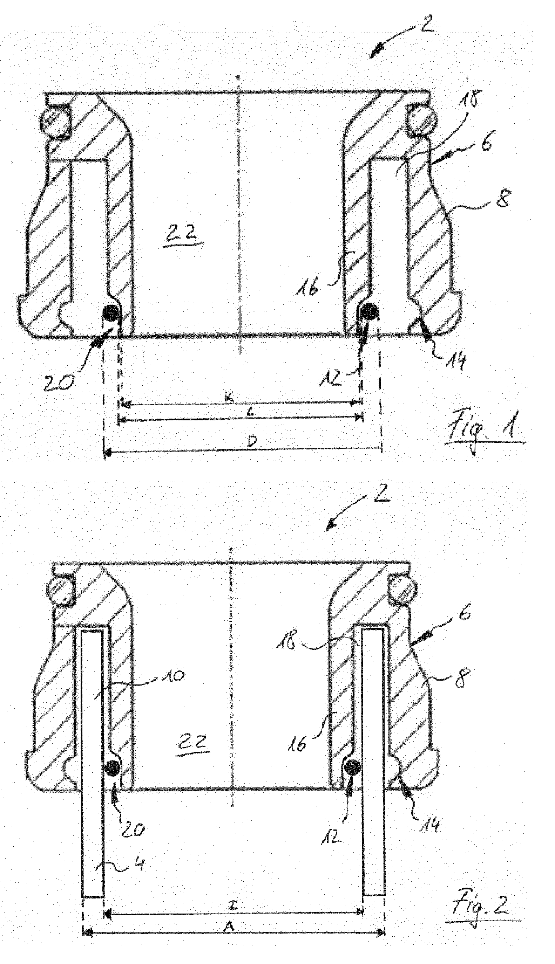

In Figur 1 ist ein zylindrisches Kupplungselement 6 schematisch im Querschnitt dargestellt. Das Kupplungselement 6 weist einen hülsenförmigen Hauptstutzen 8 auf. Der hülsenförmige Hauptstutzen 8 ist zylinderringförmig. Außerdem weist das Kupplungselement 6 einen zylindrischen Hilfsstutzen 16 auf, der derart in den Hauptstutzen 8 hineinragt, dass zwischen dem Hauptstutzen 8 und dem Hilfsstutzen 16 ein zylinderringförmiger Schacht 18 ausgebildet ist. In den Schacht 18 kann ein Rohr (nicht dargestellt in Figur 1) eingesteckt werden. Der Hauptstutzen 8 und der Hilfsstutzen 16 sind mechanisch, insbesondere stoffschlüssig, miteinander verbunden. Außerdem wird von dem zylindrischen Kupplungselement 6 ein Kanal 22 gebildet, durch den ein Fluid das Kupplungselement 6 durchströmen kann.

Der Hilfsstutzen 16 weist an seiner zum Hauptstutzen 8 zeigenden Seite eine Aufnahme 20 für einen Formgedächtnisring 12 auf. Die Aufnahme 20 ist an einer Stirnseite des Hilfsstutzens 16 angeordnet, so dass der Formgedächtnisring 12 besonders einfach auf den Hilfsstutzen 16 aufgeschoben werden kann. Der Formgedächtnisring 12 ist hierbei in seinem ersten Zustand. Der Formgedächtnisring 12 kann von dem ersten Zustand durch Erwärmung in einen zweiten Zustand mit einem vergrößerten Innendurchmesser L und vergrößerten Außendurchmesser D überführt werden. Im Umkehrschluss bedeutet dies, dass der Innendurchmesser L des Formgedächtnisrings 12 im ersten Zustand kleiner ist. Der Innendurchmesser L des Formgedächtnisrings 12 ist im ersten Zustand in der Weise angepasst, dass der Formgedächtnisring 12 auf der Aufnahme 20 des Hilfsstutzens 16 klemmt.

Wie in Figur 1 dargestellt, ist die Aufnahme 20 eine nach innen ragende Nut, so dass der Schacht 18 genügend Platz zum ungehinderten Einstecken des Rohrs (nicht dargestellt) bietet.

In Figur 2 ist die Baueinheit 2 mit einem Rohr 4 und einem zylindrischen Kupplungselement 6 dargestellt. Dazu ist der Endabschnitt 10 des Rohres 4 in den hülsenförmigen Hauptstutzen 8 des Kupplungselements 6 eingesteckt. Eine Überführung des Formgedächtnisrings 12 in seinen zweiten Zustand ist bisher noch nicht erfolgt. Deshalb steckt der Endabschnitt 10 des Rohres 4 "locker" in dem Schacht 18.

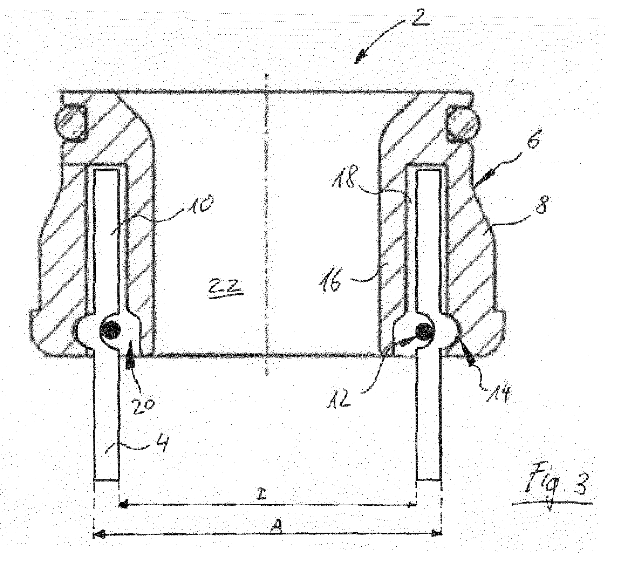

Um eine kraftschlüssige und bzw. oder formschlüssige Verbindung zwischen dem Endabschnitt 10 des Rohrs 4 und dem Kupplungselement 6 zu schaffen, ist der Formgedächtnisring 12, wie in Figur 3 dargestellt, durch Erwärmung in seinen zweiten Zustand zu überführen. Ist dies erfolgt, weitet der Formgedächtnisring 12 den Endabschnitt 10 des Rohrs 4 auf und drückt den Endabschnitt 10 des Rohrs 4 radial gegen den hülsenförmigen Hauptstutzen 8 des Kupplungselements 6. Die Steifigkeit des Formgedächtnisrings 12 ist insbesondere in seinen zweiten Zustand größer als die Steifigkeit des Endabschnitts 10 des Rohrs 4, so dass der Formgedächtnisring 12 zum Verformen des Endabschnitts 10 des Rohrs 4 eingerichtet und bzw. oder ausgebildet ist. Aus Figur 3 ist zu entnehmen, dass der Endabschnitt 10 des Rohrs 4 in einem Kontaktbereich zu dem Formgedächtnisring 12 konkav verformt ist. An der entsprechenden Außenseite des Endabschnitts 10 des Rohrs 4 ist dieser konvex nach außen verformt. Dabei ist ein Außendurchmesser A des Endabschnitts 10 des Rohrs 4 derart aufgeweitet, dass der Endabschnitt 10 des Rohrs 4 abdichtend an dem hülsenförmigen Hauptstutzen 4 des Kupplungselements 6 anliegt.

Um die Verbindung zwischen dem Rohr 4 und dem Kupplungselement 6 zu verbessern, weist der hülsenförmige Hauptstutzen 8 des Kupplungselements 6 innenseitig eine Ringnut 14 auf, gegen die der Endabschnitt 10 des Rohrs 4 drückt. Damit entstehen an der korrespondierenden Kontaktfläche zwischen dem Rohr 4 und dem Kupplungselement 6 erhöhte Kräfte, die eine verbesserte Dichtigkeit zwischen dem Rohr 4 und dem Kupplungselement 6 gewährleisten.

### Bezugszeichenliste

(Teil der Beschreibung)
- D: Außendurchmesser des Formgedächnisrings
- L: Innendurchmesser des Formgedächnisrings
- I: Innendurchmesser des Endabschnitts
- A: Außendurchmesser des Endabschnitts
- K: Außendurchmesser des Hilfsstutzens

- 2: Baueinheit
- 4: Rohr
- 6: Kupplungselement
- 8: Hauptstutzen
- 10: Endabschnitt des Rohrs
- 12: Formgedächnisring
- 14: Ringnut des Hauptstutzens
- 16: Hilfsstutzen
- 18: Schacht
- 20: Aufnahme
- 22: Kanal

## Patentansprüche

1. Baueinheit (2) mit einem Rohr (4) und einem zylindrischen Kupplungselement (6), das einen hülsenförmigen Hauptstutzen (8) aufweist, wobei ein Endabschnitt (10) des Rohrs (4) in den hülsenförmigen Hauptstutzen (8) des Kupplungselements (6) eingesteckt ist, **dadurch gekennzeichnet, dass** die Baueinheit (2) einen Formgedächnisring (12) aufweist, der von einem ersten Zustand durch Erwärmung in einen zweiten Zustand mit einem vergrößerten Außendurchmesser (D) überführbar ist, der Formgedächnisring (12) in den Endabschnitt (10) des Rohrs (4) eingebracht oder von diesem gebildet ist, der Formgedächnisring (12) in den zweiten Zustand überführt ist und dass der Formgedächnisring (12) im zweiten Zustand den Endabschnitt (10) des Rohrs (4) aufweitet und radial gegen den hülsenförmigen Hauptstutzen (8) des Kupplungselements (6) drückt.

2. Baueinheit (2) nach dem vorangehenden Anspruch, **dadurch gekennzeichnet, dass** der Außendurchmesser (D) des Formgedächnisrings (12) im ersten Zustand kleiner als ein ungeweiteter Innendurchmesser (I) des Endabschnitts (10) des Rohrs (4) ist.

3. Baueinheit (2) nach einem der vorangehenden Ansprüche, **dadurch gekennzeichnet, dass** ein Außendurchmesser (A) des Endabschnitts (10) des Rohrs (4) im zweiten Zustand des Formgedächnisrings (12) derart aufgeweitet ist, dass der Endabschnitt (10) des Rohrs (4) abdichtend an dem hülsenförmigen Hauptstutzen (8) des Kupplungselements (6) anliegt.

4. Baueinheit (2) nach einem der vorangehenden Ansprüche, **dadurch gekennzeichnet, dass** ein Außendurchmesser (D) des Formgedächnisrings (12) im zweiten Zustand größer als ein ungeweiteter Innendurchmesser des Endabschnitts (10) des Rohrs (4) ist.

5. Baueinheit (2) nach dem vorangehenden Anspruch, **dadurch gekennzeichnet, dass** ein doppelter Ringquerschnittsdurchmesser des Formgedächnisrings (12) kleiner als eine betragsmäßige Differenz zwischen dem Außendurchmesser (D) des Formgedächnisrings (12) im zweiten Zustand und dem Außendurchmesser (D) des Formgedächnisrings (12) im ersten Zustand ist.

6. Baueinheit (2) nach einem der vorangehenden Ansprüche, **dadurch gekennzeichnet, dass** der hülsenförmige Hauptstutzen (8) des Kupplungselements (6) innenseitig eine Ringnut (14) aufweist, gegen die der Endabschnitt (10) des Rohrs (4) drückt, wenn der Formgedächnisring (12) in dem zweiten Zustand ist.

7. Baueinheit (2) nach einem der vorangehenden Ansprüche, **dadurch gekennzeichnet, dass** das Kupplungselement (6) einen zylindrischen Hilfsstutzen (16) aufweist, der derart in den Hauptstutzen (8) hineinragt, dass zwischen dem Hauptstutzen (8) und dem Hilfsstutzen (16) ein zylinderringförmiger Schacht (18) zum Einstecken des Endabschnitts (10) des Rohrs (4) ausgebildet ist.

8. Baueinheit (2) nach dem vorangehenden Anspruch, **dadurch gekennzeichnet, dass** der Hilfsstutzen (16) an seiner zum Hauptstutzen (8) zeigenden Seite eine Aufnahme (20) für den Formgedächnisring (12) aufweist.

9. Baueinheit (2) nach dem vorangehenden Anspruch, **dadurch gekennzeichnet, dass** die Aufnahme (20) derart angeordnet ist, dass ein von der Aufnahme (20) fixierter Formgedächnisring (12) und die Ringnut (14) koaxial sowie in Längsrichtung des Kupplungselements (6) in einer gleichen Ebene angeordnet sind.

10. Verfahren zur Herstellung einer Baueinheit (2) mit einer Pressverbindung zwischen einem Rohr (4) und einem Kupplungselement (6) umfassend die Schritte:
a. Bereitstellen eines zylindrischen Kupplungselements (6), das einen hülsenförmigen Hauptstutzen (8) aufweist,
b. Bereitstellen eines Rohrs (4),
c. Einbringen eines Formgedächnisrings (12) in einen Endabschnitt (10) des Rohrs (4), wobei der Formgedächnisring (12) in einen ersten Zustand überführt ist, und wobei der Formgedächnisring (12) von dem ersten Zustand durch Erwärmung in einen zweiten Zustand mit einem vergrößerten Außendurchmesser (D) überführbar ist,
d. Einstecken des Endabschnitts (10) des Rohrs (4) in den Hauptstutzen (8) des Kupplungselements (6), und
e. Erwärmen des Formgedächnisrings (12) bis dieser den zweiten Zustand erreicht, so dass der Formgedächnisring (12) den Endabschnitt (10) des Rohrs (4) aufweitet und radial gegen den Hauptstutzen (8) des Kupplungselements (6) drückt.

11. Verfahren nach Anspruch 10, **gekennzeichnet durch** ein Fixieren des Formgedächnisrings (12) im ersten Zustand auf einem Hilfsstutzen (16), der derart in den Hauptstutzen (8) hineinragt, dass zwischen dem Hauptstutzen (8) und dem Hilfsstutzen (16) ein zylinderringförmiger Schacht (18) zum Einstecken des Endabschnitts (10) des Rohrs (4) ausgebildet ist.

12. Verfahren nach einem der vorangehenden Ansprüche 10 bis 11, **dadurch gekennzeichnet, dass** das Einbringen des Formgedächnisrings (12) mit dem Einstecken des Rohrs (4) in den Hauptstutzen (8) erfolgt.

13. Verfahren nach Anspruch 10, **dadurch gekennzeichnet, dass** der Formgedächnisring (12) in den Endabschnitt (10) des Rohrs (4) vor dem Einstecken des Endabschnitts (10) des Rohrs (4) in den Hauptstutzen (8) eingebracht, insbesondere eingeklemmt, wird.

14. Verfahren nach einem der vorangehenden Ansprüche 10 bis 11, **gekennzeichnet durch** ein form- oder stoffschlüssiges Verbinden des Formgedächnisrings (12) mit dem Endabschnitt (10) des Rohrs (4).
